## Europäisches Patentamt
## European Patent Office
## Office européen des brevets

(19)

(11) Publication number: **0 032 425**
**B1**

(12)

# EUROPEAN PATENT SPECIFICATION

(45) Date of publication of patent specification: **05.10.83**

(21) Application number: **81300057.7**

(22) Date of filing: **07.01.81**

(51) Int. Cl.³: **C 09 C 1/36**, C 09 C 3/06, C 09 C 3/08

(54) **Post-treated titanium dioxide, a process for obtaining the same, and a process for preparing a titanium dioxide pigment.**

(30) Priority: **11.01.80 IT 1915680**

(43) Date of publication of application:
**22.07.81 Bulletin 81/29**

(45) Publication of the grant of the patent:
**05.10.83 Bulletin 83/40**

(84) Designated Contracting States:
**BE DE FR GB NL**

(56) References cited:
**US - A - 2 441 225**
**US - A - 3 036 926**
**US - A - 3 853 575**

The file contains technical information
submitted after the application was filed and not
included in this specification

(73) Proprietor: **Montedison S.p.A.**
**31, Foro Buonaparte**
**I-20121 Milan (IT)**

(72) Inventor: **Scotti, Carlo**
**38, Via Piemonte**
**Voghera Pavia (IT)**
Inventor: **Pace, Renato Casimiro**
**6, Via Viora**
**Alessandria (IT)**
Inventor: **Carra', Sergio**
**1, Via Carlo Poma**
**Milan (IT)**
Inventor: **Santacesaria, Elio**
**20, Via Fratelli Rosselli**
**Milan (IT)**

(74) Representative: **Whalley, Kevin et al,**
**Marks & Clerk 57/60 Lincoln's Inn Fields**
**London WC2A 3LS (GB)**

Courier Press, Leamington Spa, England.

Post-treated titanium dioxide, a process for obtaining the same, and a process for preparing a titanium dioxide pigment

The present invention relates to post-treated titanium dioxide having pigmentary morphological and granulometric characteristics, to a process for obtaining the same, and to a process for preparing a titanium dioxide pigment.

Usually $TiO_2$ pigment particles are coated by means of a wet treatment. For this purpose, on the $TiO_2$ particles there are precipitated, for instance, aluminium and silicon hydroxides and possibly titanium hydroxide. The mass is then dried as a result of which the hydroxides are converted to hydrated oxides. This treatment causes an improvement of different characteristics of a pigment; specifically the process actually increases the photostability of the pigment (mainly due to the effect of the aluminium oxide hydrate) and increases its chemical affinity for substances with which it comes into contact during the preparation of paints, plastics materials, etc. Moreover, it exerts a positive action on the dispersability of the pigment particles.

However, with this type of treatment, in order to achieve a good photostability, high coating percentages are necessary. As the coating is also deposited in a non-uniform way, there results an increase of the specific surface area beyond the desired levels; in fact with a high specific surface area there occur high vehicle absorptions which consequently adversely affect the connected rheological properties.

We are aware of U.S. Patent No. 2 441 225, which essentially describes and claims a process of preparing a composite pigmentary material which comprises heating finely divided titanium dioxide in the presence of vaporized aluminium chloride at a temperature of about 600°C.

We are also aware of U.S. Patent No. 3 036 926, which essentially describes and claims a method of treating finely divided titanium dioxide which comprises reacting said titanium dioxide suspended in gases with aluminium chloride vapor at a temperature high enough to cause the titanium dioxide to react with aluminium chloride vapor, said gases being inert to said reaction and thereafter immediately contacting the resulting mixture with water vapor.

One object of this invention is that of providing titanium dioxide particles with pigmentary morphological and granulometric characteristics and having a chemically reactive coating.

Still another object of this invention is that of conferring to such a coating a strong adherence to the $TiO_2$ particles.

Yet another object of this invention is that of making such a coating uniform and compact.

A further object of the invention is that of conferring to the $TiO_2$ particles thus coated a controllable specific surface area.

Another object of the invention is that of providing a process for obtaining the abovesaid chemically reactive coating.

Still another object of the invention is that of preparing a pigment superficially coated with organic molecules which impart to it an affinity for organic vehicles, for instance paint vehicles, starting from the $TiO_2$ with a chemically reactive coating.

The present invention in one aspect provides titanium dioxide particles having pigmentary morphological and granulometric characteristics, wherein the particles have a chemically reactive coating comprising a mixture of oxide and oxychloride selected from $Al_2O_3$ and $AlOCl$, $SiO_2$ and $SiOCl_2$, and $ZrO_2$ and $ZrOCl_2$.

The chemical reactivity of these new products is due to the presence of the oxychlorides.

Due to these reactive groups, it is possible to fix onto the particles substances containing aminic, carboxylic, or hydroxylic groups, thereby obtaining pigments with an affinity for organic vehicles, for instance vehicles for paints based on alkyd, polyester, melaminic, acrylic and phenolic resins.

In general, the atomic ratio between Cl and Al, Si or Zr, present in these new products, is from 0.10 to 0.90.

The invention in another aspect provides a process for preparing titanium dioxide particles having pigmentary morphological and granulometric characteristics, wherein, to form on the particles the above mentioned chemically reactive coating, the surface of the particles is activated in a moving bed by means of a thermal treatment with an anhydrous gas at a temperature from 400° to 600°C, and wherein the particles are then reacted in a moving bed with an inorganic chloride selected from $AlCl_3$, $SiCl_4$ and $ZrCl_4$, in the presence of a carrier gas, at a temperature from 350° to 600°C.

In the reaction stage there takes place a true and proper corrosion reaction of the surface of the $TiO_2$ particles by the action of the chlorides themselves, according to the following reactions:

$$(x+y)TiO_2+(2y+\frac{4}{3}x)AlCl_3 \rightarrow (x+y)TiCl_4+2yAlOCl+\frac{2}{3}xAl_2O_3 \qquad [1]$$

$$(x+y)TiO_2+(2y+x)SiCl_4 \rightarrow (x+y)TiCl_4+2ySiOCl_2+SiO_2 \qquad [2]$$

$$(x+y)TiO_2+(2y+x)ZrCl_4 \rightarrow (x+y)TiCl_4+2yZrOCl_2+xZrO_2 \qquad [3]$$

**0 032 425**

In these reactions, the value of $y$ tends to drop when the temperature rises; that is, the quantity of oxychlorides with respect to the corresponding oxides tends to decrease with rise of temperature.

The corrosion reaction of the $TiO_2$ is made possible by the preceding activation stage which, amongst others, has the effect of eliminating the superficial $TiO_2$ hydroxyls, hindering their reaction with $AlCl_3$, etc., with the formation of a slight superficial passivating surface layer of $Al_2O_3$, etc., which would block any further reaction of $TiO_2$ with $AlCl_3$, etc.

The product obtained at the end of the chlorination stage is notable for the high adhesion of the coating of the particles.

The coating is compact and has a very uniform thickness, the elementary particles of the pigment, especially in the case of $Al_2O_3$ and $AlOCl$, practically retaining their original shape. Also the specific surface area of the pigment does not suffer any substantial increment, especially in the case of $Al_2O_3$ and $AlOCl$, unless it is desired to increase it within controllable limits, by following the procedures that will be explained subsequently.

In the activation and reaction stages there is used a moving bed, that is a bed in which particles of $TiO_2$ are put in motion and placed into close contact with a gas passed through the activation or reaction zone. Preferably, the process is effected in a fluidized bed. Pneumatic conveyors, rotary kilns, etc. can also be used.

It has been found, according to this invention, that it is not necessary to disaggregate the elementary particles of pigment by grinding before treatment, in order to obtain a good coating on the individual particles. This is convenient in as much as the $TiO_2$ particles are often in the form of aggregates having dimensions suited for their use in a moving bed, and in particular in a fluidized bed.

Such is the case of $TiO_2$ via sulphate coming from a calcining furnace; it is quite sufficient to carry out one screening in order to eliminate the fraction greater than about 500 microns.

If the available particles are too small to be used in a moving bed, they may be granulated according to conventional granulating techniques, for instance in a Heinrich type granulator.

If it is desired to reduce or increase the size of the available $TiO_2$ particles, it is preferable to adjust their size to values of 45 to 500 microns, which are the sizes most suited for fluidized beds. These values are referred to the minimum and maximum sizes of the particles, and do not refer to their mean diameter which may, for instance, be from 80 to 130 microns.

As already explained, the activation phase is carried out at a temperature from 400° to 600°C. Below 400°C, the activation reaction is too slow. Above 600°C, there are obtained end products of an inferior quality. Preferably the activation is carried out at a temperature from 500° to 600°C.

The anhydrous gas used for the activation may be, for instance, either nitrogen or air.

The lower the treatment temperature and the more humid the starting product, the greater is the duration of the activation reaction. Usually there are used activation times of 15 minutes to 3 hours.

The activation must be carried out in apparatus that will allow a good contact between the anhydrous gas and the $TiO_2$ particles; for this purpose a moving bed is used, more particularly a fluidized bed.

The reaction stage with the chlorides takes place at a temperature from 350° to 600°C. At a temperature below 350°C, the reaction tends to slow down too much, while at a temperature above 600°C the formation of oxychlorides becomes too limited; that is, the products that are obtained tend to be unsufficiently chemically reactive.

The reaction stage is preferably carried out at a temperature from 400° to 500°C.

The carrier gas is an anhydrous gas that is inert towards $TiO_2$ as well as towards the chlorides themselves, unless it is desired to increase in a controllable way the specific surface area of the particles, as will be explained subsequently.

The carrier gas may be, for instance, nitrogen or a rare gas; however, preferably nitrogen is used. The chloride vapours are introduced into the carrier gas.

A degree of conversion may be defined as the ratio between the $TiO_2$ that has reacted in the corrosion reaction and the $TiO_2$ of the starting pigment. The degree of conversion thus corresponds to a measure of the corrosion intensity as well as of the quantity of coating present on the particles.

By the process according to this invention, it is possible to control the degree of conversion by varying both the reaction temperature (the higher the temperature the faster is the reaction) as well as the duration of the reaction stage itself. The degree of conversion may vary, for instance, from 0.1% to 5% and more.

The partial pressure of the chloride in the reaction medium is in general from 0.005 to 0.15 atm.

The reaction is conducted in an apparatus suited for ensuring an intimate contact between the solid and the gaseous phases. For that purpose a moving bed is used, more particularly a fluidized bed.

The duration of the chlorination stage is determined having regard to the temperature and the degree of conversion it is desired to achieve. Suitable reaction times are, for instance, from 20 minutes to 2 hours.

In the case of the reaction with $AlCl_3$, the specific surface area of the $TiO_2$ particles remains practically unchanged, while it slightly increases in the case of the reaction with $SiCl_4$ or $ZrCl_4$.

Whenever it is desired to obtain a greater specific surface area of the particles, depending on the use to which they are to be directed, simultaneously with the reaction of the chloride with the $TiO_2$

3

particles, there may be carried out an oxidation of the chloride with oxygen, such reaction causing the formation of the corresponding oxides according to equations [4], [5] and [6] and their deposition on the $TiO_2$ particles.

$$4AlCl_3+3O_2 \rightarrow 2Al_2O_3+6Cl_2 \qquad [4]$$

$$SiCl_4+O_2 \rightarrow SiO_2+2Cl_2 \qquad [5]$$

$$ZrCl_4+O_2 \rightarrow ZrO_2+2Cl_2 \qquad [6]$$

Since the oxides that have formed according to the above reactions deposit onto the $TiO_2$ particles instead of being produced by reaction between the $TiO_2$ particles and the chlorides, they will form, for the part pertaining to them, a less uniform coating than the one that is obtained by the corrosion reaction alone, whereby there is obtained an increase in the specific surface area of the particles.

Upon carrying out a mixed $TiO_2$-corrosion and chloride-oxidation reaction, the coating that will be formed will thus contain oxides coming from both reactions and the increase in the specific surface area must be ascribed, in the case of $AlCl_3$, almost exclusively to the oxidation reaction, while in the case of $SiCl_4$ and $ZrCl_4$ it will be due to both reactions.

If it is desired to carry out the oxidation reaction, it will be necessary to operate at a temperature of at least 400°C. Below this temperature, the reaction occurs in a much too limited way. As the temperature increases above 400°C, the oxidation reaction takes place with ever growing intensity, whereby there will simultaneously increase both the specific surface area of the particles as well as the quantity of oxide in the coating coming from the oxidation reaction.

The mixed $TiO_2$ chlorination and chloride-oxidation reaction is preferably carried out at a temperature of 400° to 500°C.

When both reactions are conducted simultaneously it is preferred to use air as the carrier gas.

The specific surface area of the coating may be controlled by the use or omission of the oxidation reaction and by its intensity which, in its turn, depends on the temperature used.

The product obtained at the end of the corrosion reaction or of the mixed corrosion and oxidation reaction is an acid product, given the presence of the oxychlorides. Its pH value varies, for instance, from 4.4 to 6.3.

The present invention in a further aspect provides a process for preparing a titanium dioxide pigment coated with an organic substance containing aminic, carboxylic or hydroxylic groups capable of imparting to the pigment an affinity for organic vehicles, for instance in paints, wherein $TiO_2$ particles, coated with a chemically reactive coating according to the first aspect of the invention, are made to react with an organic substance having —$NH_2$, —COOH or —OH groups.

The reaction preferably takes place at a temperature from 20° to 200°C.

Preferably the reaction is conducted in an aprotic organic solvent, for instance tetrahydrofuran or n-hexane.

Suitable organic substances are lactic acid, isopropanolamine, monopropylether-ethylene glycol, monomethylether-ethylene glycol and trimethylolpropane.

The end product will thus consist of $TiO_2$ particles coated with a first layer of oxide of Al, Si or Zr and a second layer of an organic substance chemically bound to the first layer.

The invention will be further described with reference to the following illustrative Examples.

Example 1

There was used a discontinuous fluid-bed reactor consisting of a quartz pipe having an inside diameter of 4.5 cm. The disengaging height of the bed was 50 cm.

This reactor was loaded with 60 g of a 99.9% concentration $TiO_2$ of rutile crystalline structure, and with an elementary granulometry characterized by a mean geometrical diameter $d_g$ equal to 0.185 micron, by a standard geometrical deviation $\sigma g=1.37$ and by a specific surface area of 5.5 sq. mt/g.

This $TiO_2$ was obtained by a process passing through sulphate and was drawn off at the outlet of a calcining furnace. The product was in the form of aggregates with a mean diameter of 110 microns.

The activation stage of the process according to the invention was conducted maintaining the reactor at 600°C and by subjecting the titanium dioxide to a 50 Nl/hr flow of nitrogen for 120 minutes.

The corrosion reaction of the process according to the invention was conducted at 500°C with a 100 Nl/hr flow of a gaseous mixture consisting of $N_2$ and $AlCl_3$, in which mixture the partial pressure of the $AlCl_3$ was $1.46.10^{-2}$ atm., which corresponded to $5.97.10^{-7}$ mols/cc. The corrosion treatment lasted 127 minutes and yielded a deposit of $Al_2O_3$ and AlOCl which, calculated as $Al_2O_3$, corresponded to 1.4% on the total weight of the particles (i.e. on the weight of the $TiO_2$ and its coating).

The quantity of Cl and Al in the coating was determined by fluorescence X-ray examination. The atomic ratio Cl/Al was 0.41. The product had a pH value of 4.4 and a specific surface area of 5.6 sq.mt/g.

The photostability of the product was measured in a Resial 1180 based enamel baked at 135°C.

4

# 0 032 425

Resial 1180, produced by Montedison SpA, is an alkydic resin. The pigment specimen in the enamel was subjected, in an accelerated exposure test, to the ultraviolet radiation of a carbon arc lamp, produced by a Fade-Ometer of the Atlas Electric Devices Company. The duration of the exposure was 17 hrs. On the basis of the reflectance loss with the blue filter after exposure, there was calculated a photoinstability index $F_i$ which is so much the lower, the more photostable the product. The photoinstability index of $F_i$ of the product obtained in the example was lower than or equal to 0.1, while that of the starting $TiO_2$ was 1.65. Resial is a registered trade mark.

Example 2

An activation stage was effected as described in the foregoing example 1. Thereupon, there was carried out a corrosion stage with $AlCl_3$ with a simultaneous oxidation at 400°C, by means of a 100 Nl/hr. flow of a gaseous mixture consisting of air and $AlCl_3$, wherein the partial pressure of the $AlCl_3$ was $1.46.10^{-2}$ atm. The treatment time was 360 minutes.

The product that was thus obtained had an $Al_2O_3$ and AlOCl coating equivalent to 1.08% by weight of $Al_2O_3$ on the total weight of the particles. The atomic ratio Cl/Al was 0.80. The product had a pH value of 4.4 and a specific surface area of 6.5 sq.mt/g.

Example 3

An activation stage was effected as described in the foregoing example 1. Thereupon, there was carried out a corrosion stage in nitrogen with $AlCl_3$, the reaction being conducted at 600°C with a 100 Nl/hr flow of a gaseous mixture containing $N_2$ and $AlCl_3$, wherein the partial pressure of the $AlCl_3$ was $1.46.10^{-2}$ atm. The duration of the reaction was 60 minutes.

The product obtained had a coating of $Al_2O_3$ and AlOCl equivalent to 1.3% by weight of $Al_2O_3$ on the total weight of the particles. The atomic ratio Cl/Al was 0.25. The product had a pH value of 4.8, an $F_i$ index lower than or equal to 0.1, and a specific surface area of 5.3 sq.mt/g.

Example 4

An activation stage was effected as described in the foregoing example 1. Thereupon, there was carried out a corrosion stage with $AlCl_3$ and simultaneously an oxidation at 600°C, by means of a 100 Nl/hr flow of a gaseous mixture of air and $AlCl_3$, wherein the partial pressure of the $AlCl_3$ was $1.46.10^{-2}$ atm. The treatment time was 90 minutes.

The product obtained had a coating of $Al_2O_3$ and AlOCl equivalent to 1.61% by weight of $Al_2O_3$ on the total weight of the particles. The atomic ratio Cl/Al was lower than or equal to 0.10. The product had a pH value of 5.2, an $F_i$ index lower than or equal to 0.1, and a specific surface area of 8.5 sq.mt/g.

Example 5

An activation stage was effected as described in the foregoing example 1. Thereupon, there was carried out a corrosion stage in nitrogen with $SiCl_4$, the reaction being conducted at 400°C with a 100 Nl/hr flow of a gaseous mixture consisting of $N_2$ and $SiCl_4$, wherein the partial pressure of the $SiCl_4$ was $1.7.10^{-2}$ atm. The duration of the reaction was 120 minutes.

The product thus obtained had a $SiO_2$ and $SiOCl_2$ coating equivalent to 1.1% by weight of $SiO_2$ on the total weight of the particles. The atomic ratio Cl/Si was 0.89. The product obtained had a pH value of 5.1, and a specific surface area of 9.15 sq.mt/g.

Example 6

An activation stage was effected as described in the foregoing example 1. Thereupon, there was carried out a corrosion stage with $SiCl_4$ and a simultaneous oxidation at 600°C, by means of a 100 Nl/hr flow of a gaseous mixture of air and $SiCl_4$, in which the $SiCl_4$ partial pressure was $1.4.10^{-2}$ atm. The treatment time was 180 minutes.

The product thus obtained had a coating of $SiO_2$ and $SiOCl_2$ equivalent to 2.1% by weight of $SiO_2$ on the total weight of the particles. The atomic ratio Cl/Si was 0.10. The product thus obtained had a pH value of 6.3, and a specific surface area of 9.0 sq.mt/g.

Example 7

An activation stage was effected as described in the foregoing example 1. Thereupon, there was carried out a corrosion stage with $SiCl_4$ in nitrogen, the reaction being conducted at 500°C in a 100 Nl/hr. flow of a gaseous mixture of $N_2$ and $SiCl_4$, wherein the partial pressure of the $SiCl_4$ was $1.4.10^{-2}$ atm. The duration of the reaction was 180 minutes.

The product thus obtained had a $SiO_2$ and $SiOCl_2$ coating equivalent to 1.1% by weight of the $SiO_2$ on the total weight of the particles. The atomic ratio Cl/Si was 0.45. The product had a pH value of 5.85, and a specific surface area of 8.4 sq.mt/g.

Example 8

An activation stage was effected as described in the foregoing example 1. Thereupon, there was carried out a corrosion stage with $SiCl_4$ in nitrogen, the reaction being conducted at 600°C by means of

a 100 Nl/hr flow of a gaseous mixture of $N_2$ and $SiCl_4$, wherein the partial pressure of the $SiCl_4$ was $1.4.10^{-2}$ atm. The duration of the reaction was 180 minutes.

The product thus obtained had a $SiO_2$ and $SiOCl_2$ coating equivalent to 1.6% by weight of $SiO_2$ on the total weight of the particles. The atomic ratio Cl/Si was 0.15. The product had a specific surface area of 8.3 sq.mt/g.

Example 9

An activation stage was effected as described in the foregoing example 1. Thereupon, there was carried out a corrosion stage with $ZrCl_4$ in nitrogen, the reaction being conducted at a temperature of 600°C with a 100 Nl/hr flow of a gaseous mixture consisting of nitrogen and $ZrCl_4$, with a partial pressure of $ZrCl_4$ equal to 40 mmHg corresponding to $5.3.10^{-2}$ atm. The duration of the reaction was 75 minutes.

The product thus obtained had a $ZrO_2$ and $ZrOCl_2$ coating equivalent to 2.6% by weight of $ZrO_2$ on the total weight of the particles. The atomic ratio Cl/Zr was 0.10. The product had a pH value 5.3, and a specific surface area of 8.4 sq.mt/g.

Example 10

An activation stage was effected as described in the foregoing example 1. Thereupon, there was carried out a corrosion stage in nitrogen with $ZrCl_4$, the reaction being conducted at a temperature of 400°C with a 100 Nl/hr flow of a gaseous mixture of $N_2$ and $ZrCl_4$, wherein the partial pressure of the $ZrCl_4$ was $5.3.10^{-2}$ atm. The duration of the reaction was 120 minutes.

The product thus obtained had a $ZrO_2$ and $ZrOCl_2$ coating equivalent to 1.2% by weight of $ZrO_2$ on the total weight of the particles. The atomic ratio Cl/Zr was 0.65. The product had a pH value of 2.5, and a specific surface area of 9.0 sq.mt/g.

Example 11

Using the same reactor as described in the foregoing example 1, an activation stage was carried out at 450°C subjecting the titanium dioxide to a 50 Nl/hr flow of nitrogen for 120 minutes.

Thereupon, there was carried out a corrosion stage at 450°C with $SiCl_4$, by means of a 100 Nl/hr flow of a gaseous mixture of nitrogen and $SiCl_4$, wherein the partial pressure of the $SiCl_4$ was $1.4.10^{-2}$ atm. The treatment time was 180 minutes.

At the end of the corrosion stage there was obtained a coating of silicon compounds equivalent to 1.3% by weight of $SiO_2$ on the total weight of the particles. The product thus obtained had an atomic ratio Cl/Si of 0.7, a pH value of 2.5, and a specific surface area of 8.7 sq.mt/g.

Example 12

Using the same reactor as described in the foregoing example 1, an activation stage was carried out at 450°C by subjecting the titanium dioxide to a flow of 50 Nl/hr of air for 120 minutes.

Thereupon, there was carried out a corrosion stage with $AlCl_3$ and a simultaneous oxidation stage at 500°C by means of a 100 Nl/hr. flow of a gaseous mixture of air and $AlCl_3$, wherein the partial pressure of the $AlCl_3$ was $3.7.10^{-2}$ atm. The treatment time was 120 minutes.

At the end of the corrosion-oxidation stage there was obtained a coating of aluminium compounds equivalent to 1.48% by weight of $Al_2O_3$ on the total weight of the particles. The product thus obtained had an atomic ratio Cl/Al of 0.20, a pH value of 4.6, and a specific surface area of 6.1 sq.mt/g.

Example 13

In this example a coated $TiO_2$ pigment was treated with monomethylether-ethylene glycol. To one part by weight of reactive $TiO_2$ coated with $SiO_2$ and $SiOCl_2$, and prepared according to the procedure of the foregoing example 11, there were added 0.1 part of the above indicated glycol and 2.5 parts of n-hexane which serves as a solvent.

The reaction was conducted in a grinding jar at room temperature for 60 minutes. At the end of the reaction the phases were separated by filtering, and the solid product obtained was washed with n-hexane and then dried under vacuum at 60°C for 18 hours.

In order to evaluate the affinity for organic substances of the end product, the oil absorption was determined according to the ASTM D 1483-60 method, the only difference being that instead of linseed oil there was used as wetting agent dioctylphthalate. The oil absorption is expressed as the wetting point and corresponds to the number of cubic centimeters of dioctylphthalate required for obtaining a compact mix starting from 10 g of a $TiO_2$ sample.

The wetting point obtained is given in the table below. For comparative purposes, there was obtained the wetting point for $TiO_2$ free of treatment, and for $TiO_2$ subjected to a common wet post-treatment with a silica coating.

| Sample | Wetting point |
|---|---|
| TiO$_2$ of the example | 2.85 |
| TiO$_2$ wet post-treated with SiO$_2$ | 2.82 |
| TiO$_2$ not post-treated | 3.90 |

It can be seen that the wetting point of the sample of the example is practically identical with that of the sample obtained with the conventional post-treatment.

Example 14

In the present example a reactive pigment of TiO$_2$, coated with AlCl$_3$ and AlOCl according to the procedure of the foregoing example 12, was treated with monomethylether-ethylene glycol following the procedures indicated in the foregoing example 13.

On the dried product thus obtained there was evidenced the formation of a chemical bond between the glycol and the TiO$_2$ particles through thermal stability tests in explorative differential calorimetry. In fact there was ascertained a heat absorption both at 130°—132°C as well as at 200°—240°C.

On the contrary, carrying out tests on non-reactive TiO$_2$ samples, treated with the glycol according to the procedure of example 13, there occurred a heat absorption only at 130°—132°C, which clearly corresponds to the desorption of the glycol which has a boiling temperature of 124°C. the heat absorption at 200°C to 240°C is thus connected with a rupture of chemical bonds of the glycol chemically fixed onto the surface of the TiO$_2$ particles.

The wetting point was determined by the procedure described in Example 13, on the product obtained in the present Example and, for comparative purposes, on TiO$_2$ free of treatment as well as on TiO$_2$ subjected to a common wet post-treatment with an alumina coating. The results thus obtained are given in the table below.

| Sample | Wetting point |
|---|---|
| TiO$_2$ of the Example | 2.90 |
| TiO$_2$ wet post-treated with alumina | 2.80 |
| TiO$_2$ not post-treated | 3.90 |

It can be seen that the TiO$_2$ post-treated as described in the Example has a wetting point close to that of the TiO$_2$ obtained with a conventional post-treatment.

Attention is drawn to our copending European Patent Application No. 81300058.5, which describes and claims a process for the post-treatment of titanium dioxide particles having pigmentary morphological and granulometric characteristics, characterized in that the surface of the particles is activated in a moving bed by a thermal treatment with an anydrous gas at a temperature from 400°C to 600°C, in that the particles are then reacted in a moving bed with one or more inorganic chlorides selected from AlCl$_3$, SiCl$_4$ and ZrCl$_4$, in the presence of a carrier gas, at a temperature from 400° to 700°C, and in that finally the said particles are treated in a moving bed with a gas containing water vapor at a temperature from 200° to 400°C.

**Claims**

1. Titanium dioxide particles having pigmentary morphological and granulometric characteristics, characterized in that the said particles have a chemically reactive coating comprising a mixture of oxide and oxychloride selected from Al$_2$O$_3$ and AlOCl, SiO$_2$ and SiOCl$_2$, and ZrO$_2$ and ZrOCl$_2$.

2. Titanium dioxide particles as claimed in claim 1, characterized in that the atomic ratio Cl/Al, Cl/Si or Cl/Zr of the coating is from 0.10 to 0.90.

3. A process for the preparation of titanium dioxide particles having pigmentary morphological and granulometric characteristics, characterized in that, to form on the said particles a chemically reactive coating according to either claim 1 or 2, the surface of the particles is activated in a moving bed by means of a thermal treatment with an anhydrous gas, at a temperature from 400° to 600°C, and in that the particles are then reacted in a moving bed with an inorganic chloride selected from AlCl$_3$, SiCl$_4$ and ZrCl$_4$, in the presence of a carrier gas, at a temperature from 350° to 600°C.

4. A process as claimed in claim 3, characterized in that the said thermal activation treatment is carried out at a temperature from 500° to 600°C.

5. A process as claimed in claim 3 or 4, characterized in that, in the said reaction of the particles with the inorganic chloride, as a carrier gas there is used either nitrogen or a rare gas.

6. A process as claimed in claim 3 or 4, characterized in that, simultaneously with the said reaction of the particles with the inorganic chloride, the chloride is also made to react, at a temperature of at least 400°C, with oxygen, to thus form the corresponding oxide which deposits on the surface of the particles.

7. A process as claimed in claim 6, characterized in that, in said reaction of the particles with the inorganic chloride and the said reaction of the chloride with oxygen, as a carrier gas there is used air.

8. A process as claimed in any of claims 3 to 7, characterized in that the said reaction of the particles with the inorganic chloride and the said optional reaction of the chloride with oxygen is carried out at a temperature from 400° to 500°C.

9. A process for preparing a titanium dioxide pigment coated with an organic substance containing aminic, carboxylic or hydroxylic groups capable of imparting to the pigment an affinity for organic vehicles, characterized in that titanium dioxide particles, coated with a chemically reactive coating according to either claim 1 or 2, are made to react with an organic substance having —$NH_2$, —COOH or —OH groups.

10. A process as claimed in claim 9, characterized in that the reaction is conducted at a temperature from 20° to 200°C.

11. A process as claimed in claim 9 or 10, characterized in that the reaction is carried out in an aprotic organic solvent.

**Patentansprüche**

1. Titandioxidteilchen mit pigmentartigen morphologischen und granulometrischen Charakteristiken, dadurch gekennzeichnet, daß die Teilchen einen chemisch reaktiven Überzug aufweisen, der ein Gemisch von Oxid und Oxychlorid, ausgewählt unter $Al_2O_3$ und AlOCl, $SiO_2$ und $SiOCl_2$ und $ZrO_2$ und $ZrOCl_2$, umfaßt.

2. Titandioxidteilchen nach Anspruch 1, dadurch gekennzeichnet, daß Atomverhältnis Cl/Al, Cl/Si oder Cl/Zr des Überzugs 0,10 bis 0,90 beträgt.

3. Verfahren zur Herstellung von Titandioxidteilchen mit pigmentartigen morphologischen und granulometrischen Charakteristiken, dadurch gekennzeichnet, daß man zur Ausbildung eines chemisch reaktiven Überzuges nach entweder Anspruch 1 oder 2 auf den Teilchen die Oberfläche der Teilchen in einem bewegten Bett mittels thermischer Behandlung in einem wasserfreien Gas bei einer Temperatur von 400° bis 600°C aktiviert und die Teilchen dann in einem bewegten Bett mit einem anorganischen Chlorid, ausgewählt unter $AlCl_3$, $SiCl_4$ und $ZrCl_4$, in Gegenwart eines Trägergases bei einer Temperatur von 350° bis 600°C umsetzt.

4. Verfahren nach Anspruch 3, dadurch gekennzeichnet, daß die thermische Aktivierungsbehandlung bei einer Temperatur von 500° bis 600°C durchgeführt wird.

5. Verfahren nach Anspruch 3 oder 4, dadurch gekennzeichnet, daß man bei der Umsetzung der Teilchen mit dem anorganischen Chlorid als Trägergas entweder Stickstoff oder ein Edelgas verwendet.

6. Verfahren nach Anspruch 3 oder 4, dadurch gekennzeichnet, daß man gleichzeitig mit der Reaktion der Teilchen mit dem anorganischen Chlorid das Chlorid bei einer Temperatur von mindestens 400°C auch mit Sauerstoff umsetzt, um dadurch das entsprechende Oxid zu bilden, das sich auf Oberfläche der Teilchen abscheidet.

7. Verfahren nach Anspruch 6, dadurch gekennzeichnet daß man bei der Reaktion der Teilchen mit dem anorganischen Chlorid und der Reaktion des Chlorids mit Sauerstoff Luft als Trägergas verwendet.

8. Verfahren nach irgendeinem der Ansprüche 3 bis 7, dadurch gekennzeichnet, daß man die Reaktion der Teilchen mit dem anorganischen Chlorid und die eventuelle Reaktion des Chlorids mit Sauerstoff bei einer Temperatur von 400° bis 500°C durchführt.

9. Verfahren zur Herstellung eines Titandioxidpigments, das mit einer organischen Substanz überzogen ist, die Amin-, Carboxyl- oder hydroxylgruppen enthält, die befähigt sind, dem Pigment Affinität für organische Lösemittel zu verleihen, dadurch gekennzeichnet, daß Titandioxidteilchen, die mit einem chemisch reaktiven Überzug nach entweder Anspruch 1 oder 2 überzogen sind, mit einer organischen Substanz mit —$NH_2$, —COOH oder —OH-Gruppen umgesetzt werden.

10. Verfahren nach Anspruch 9, dadurch gekennzeichnet, daß die Reaktion bei einer Temperatur von 20° bis 200°C durchgeführt wird.

11. Verfahren nach Anspruch 9 oder 10, dadurch gekennzeichnet, daß die Reaktion in einem aprotischen organischen Lösungsmittel durchgeführt wird.

**Revendications**

1. Particules de dioxyde de titane ayant des caractéristiques morphologiques et granulométriques pigmentaires, caractérisées en ce que lesdites particules possèdent un revêtement chimiquement réactif constitué d'un mélange d'oxyde et d'oxychlorure choisis parmi $Al_2O_3$ et AlOCl, $SiO_2$ et $SiOCl_2$, et $ZrO_2$ et $ZrOCl_2$.

2. Particules de dioxyde de titane telles que revendiquées dans la revendication 1, caractérisées en ce que le rapport atomique Cl/Al, Cl/Si ou Cl/Zr du revêtement est compris entre 0,10 et 0,90.

3. Procédé de préparation de particules de dioxyde de titane ayant des caractéristiques morphologiques et granulométriques pigmentaires, caractérisé en ce que, pour former sur lesdites particules un revêtement chimiquement réactif selon l'une des revendications 1 ou 2, la surface des particules est

**0 032 425**

activée dans un lit mobile au moyen d'un traitement thermique par un gaz anhydre, à une température de 400° à 600°C, et en ce que les particules sont ensuite mises en réaction dans un lit mobile avec un chlorure minéral choisi parmi $AlCl_3$, $SiCl_4$ et $ZrCl_4$, en présence d'un gaz vecteur à une température de 350° à 600°C.

4. Procédé suivant la revendication 3, caractérisé en ce que ledit traitement d'activation thermique est mis en oeuvre à une température de 500° à 600°C.

5. Procédé suivant la revendication 3 ou 4, charactérisé en ce que dans ladite réaction des particules avec le chlorure minéral, on utilise comme gaz vecteur soit l'azote, soit un gaz rare.

6. Procédé suivant la revendication 3 ou 4, caractérisé en ce que, en même temps que ladite réaction des particules avec le chlorure minéral, on fait aussi réagir le chlorure, à une température d'au moins 400°C avec de l'oxygène, pour former ainsi l'oxyde correspondant qui se dépose à la surface des particules.

7. Procédé suivant la revendication 6, caractérisé en ce que, dans ladite réaction des particules avec le chlorure minéral et ladite réaction du chlorure avec l'oxygène, on utilise l'air comme gaz vecteur.

8. Procédé suivant l'une quelconque des revendications 3 à 7, caractérisé en ce que ladite réaction des particules avec le chlorure minéral et ladite réaction facultative du chlorure avec l'oxygène est mise en oeuvre à une température de 400° à 500°C.

9. Procédé de préparation d'un pigment de dioxyde de titane revêtu avec une substance organique contenant des groupes aminés, carboxyliques ou hydroxyles capables de conférér au pigment une affinité pour les véhicles organiques, caractérisé en ce que les particules de dioxyde de titane revêtues d'un revêtement chimiquement réactif suivant l'une quelconque des revendications 1 ou 2, sont mis en réaction avec une substance organique possédant des groupements $—NH_2$, $—COOH$ ou $—OH$.

10. Procédé suivant la revendication 9, caractérisé en ce que la réaction est conduite à une température de 20° à 200°C.

11. Procédé suivant la revendication 9 ou 10, caractérisé en ce que la réaction est mise en oeuvre dans un solvant organique aprotique.

9